# EUROPEAN PATENT APPLICATION

(11) **EP 3 961 430 A1**
(43) Date of publication of application: **02.03.2022**
(21) Application number: 20190067.7
(22) Date of filing: 07.08.2020
(51) Int. Cl.: G06F 16/783, A63F 13/45, A63F 13/352, A63F 13/355, A63F 13/358

(54) **RECOGNITION OF VISUAL INFORMATION IN MOVING VISUAL MEDIA**

(71) Applicant: Rawbet GmbH, 60487 Frankfurt Am Main (DE)
(72) Inventor: Naftaliev, Robert, 60325 Frankfurt am Main (DE); Heinrich, Kilian, 90429 Nürnberg (DE); Sommer, Andreas, 10997 Berlin (DE); Smolin, Roland, 12209 Berlin (DE)
(74) Representative: Herrmann, Daniel

(57) **Abstract**

The present inventions relates to a method, comprising: receiving, by one or more computers (119), one or more moving visual media; taking, by the one or more computers (119), one or more screenshots (1, 11) of a first one of the received moving visual media; and extracting, by the one or more computers (119), information from the first one of the received moving visual media, the extracting including: recognizing, by the one or more computers (119), visual information (4, 5) being disclosed by at least some of the one or more screenshots (1, 11) taken of the first one of the received moving visual media. The present inventions also relates to a corresponding computer-readable medium and to a corresponding computing system.

## Description

### Technical Field

The present invention relates to computer-implemented methods, computer-readable media and computer systems for the recognition of visual information in moving visual media, especially in one or more streams of games being played.

### Background

Recognizing visual information contained in moving visual media is crucial for analytics in context of a variety of applications, such as gaming, television, security services, product tracking in logistics, and so on. However, some of these conventional approaches to recognize visual information in moving visual media involves displaying, by a display device, the moving visual media and taking, by a camera, images of the displayed moving visual media and to have the visual information be recognized by human beings. Other conventional approaches to recognize visual information in moving visual media involves storing particular states of the moving visual media and have human beings recognized visual information of the moving visual media in these particular stored states.

### Summary

There is a need to solve the problem of how to obtain information about states of incoming moving visual media in essentially real-time.

The present invention solves this problem and relates to a computer-implemented method according to independent claim 1, to a computer-readable medium according to independent claim 14 and to a computing system according to independent claim 15. Preferred embodiments are described in the dependent claims 2 to 13.

In a general aspect, the present invention relates to a method, the method comprising the following operations: receiving, by one or more computers, one or more moving visual media; taking, by the one or more computers, one or more screenshots of a first one of the received moving visual media; and extracting, by the one or more computers, information from the first one of the received moving visual media, the extracting including: recognizing, by the one or more computers, visual information being disclosed by at least some of the one or more screenshots taken of the first one of the received moving visual media.

A computer-readable medium according to the present invention stores instructions, which, when executed by one or more computers, cause the one or more computers to perform the operations of any one of the methods described herein.

A computing system according to the present invention comprises: one or more processors; a memory storing instructions which, when executed by the one or more processors, cause the one or more processors to perform the operations of any one of the methods described herein.

That is, aspects of the present invention automatically recognize visual information contained in moving visual media as the moving visual media are coming in. In other words, aspects of the present invention allow to track how the content of incoming moving visual media is developing in essentially real-time.

Particularly preferred embodiments of the present invention relate to preparing, by the one or more computers, one or more of the at least some of the one or more screenshots for the recognizing of the visual information, the preparing including: by the one or more computers, editing a portion of each of the one or more of the at least some of the one or more screenshots; wherein the recognized visual information is disclosed in the edited portion of the prepared screenshot. This involves pre-processing the screenshots before performing the recognition of the visual information and allows to enhance the accuracy of the recognition of the visual information.

Particularly preferred embodiments of the present invention relate to the first one of the received moving visual media being a first stream, the screenshots of the first stream are taken at a given frequency, each particular piece of the recognized visual information is associated with a confidence score indicating a confidence of the recognition of the particular piece of recognized visual information, and wherein the confidence scores of individual pieces of visual information recognized in the first stream contribute to a confidence level of recognition of visual information of the first stream, the method further comprising: repeatedly determining, by the one or more computers, the confidence level of the first stream and, based on the determined confidence level, dynamically adjusting, by the one or more computers, the frequency at which the screenshots are taken of the first stream, wherein the frequency is increased when the determined confidence level indicates a trend of decreasing confidence of recognition of visual information of the first stream and wherein the frequency is reduced if the determined confidence level indicates a trend of increasing confidence of recognition of visual information of the first stream. That is, the frequency with which the screenshots are taken is adjusted in accordance with a confidence with which visual information is being recognized to react to incoming moving visual media in a flexible manner while ensuring a desired amount of accuracy for the visual information recognition. Only the amount of processing capacity is used that is required to obtain a desired amount of accuracy for the visual information recognition. That also means that the frequency can be reduced when a higher frequency is not needed to reach the desired amount of accuracy for the visual information recognition.

Particularly preferred embodiments relate to the first one of the received moving visual media being a first stream, the method further comprising: in response to determining, by the one or more computers, that the first stream is not usable anymore, preliminarily setting, by the one or more computers, the first stream as pending; in case the pending first stream has not been usable for a predetermined amount of time, finally setting, by the one or computers, the pending first stream as not usable anymore; in case the pending first stream is again usable before a lapse of the predetermined amount of time, cancelling, by the one or more computers, the preliminary setting and continuing, by the one or more computers, with taking of one or more screenshots of the first stream and with recognizing, by the one or more computers, of visual information being disclosed by the one or more screenshots that are continued to be taken. This allows to reduce the failure rate and is especially beneficial for streams as moving visual media.

In addition, the received one or more streams may further include a second stream, the method further comprising: in response to preliminarily setting, by the one or more computers, the first stream as pending, starting extracting, by the one or more computers, information from the second stream, the extracting including: recognizing, by the one or more computers, visual information being disclosed by at least some of one or more screenshots taken of the second stream. This especially allows to reduce the failure rate.

The foregoing is a non-limiting summary of the invention, which is defined by the attached claims.

### Brief Description of the Drawings

Various aspects and embodiments will be described with reference to the following figures. It should be appreciated that the figures are not necessarily drawn to scale. Items appearing in multiple figures are indicated by the same or a similar reference number in all the figures in which they appear.
Figure 1 illustrates recognition of visual information in moving visual media according to embodiments of the present invention.
Figure 2 illustrates an application of the visual information recognition for streams as moving visual media, with each stream pertaining to a play of the game by a player in accordance with an embodiment of the present invention.
Figure 3 illustrates measures of adjustments of the visual information recognition that can be executed in accordance with embodiments of the present invention.

### Detailed Description

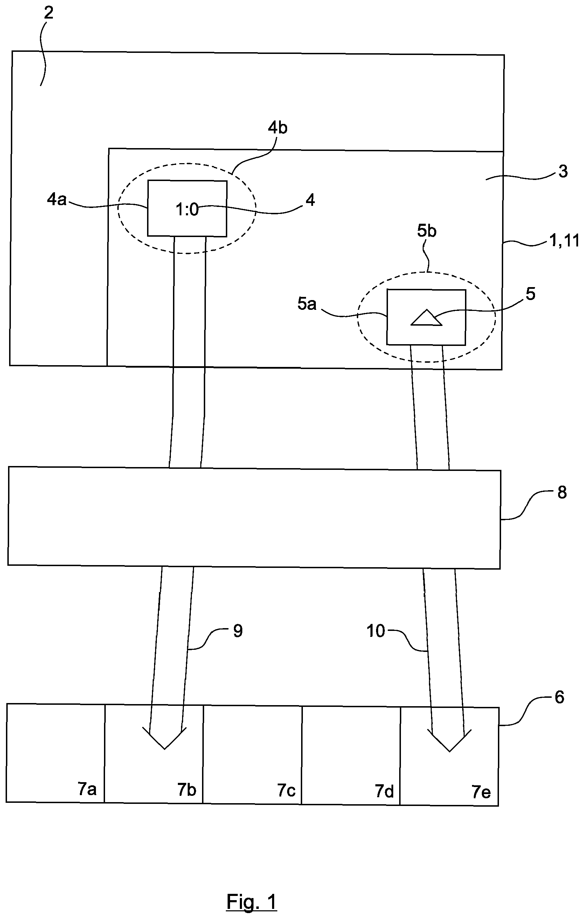

Figure 1 illustrates recognition of visual information in moving visual media according to embodiments of the present invention.

Operations for the visual information recognition may comprise: receiving, by one or more computers, such as a server 119, one or more moving visual media; taking, by the one or more computers, one or more screenshots 1, 11 of a first one of the received moving visual media; and extracting, by the one or more computers, information from the first one of the received moving visual media, the extracting including: recognizing, by the one or more computers, visual information 4, 5 being disclosed by at least some of the one or more screenshots 1, 11 taken of the first one of the received moving visual media.

The recognized visual information 4, 5 may include any one of or any combination of text 4, color, shapes 5, symbol 5, forms 5, patterns and/or visual gradient. For example, the recognized visual information may be a play time, a score 4 or a symbol 5 of a sports team (e.g. if the moving visual media pertains to a play of a game).

The operations for the visual information recognition may fruther comprise: preparing, by the one or more computers, one or more of the at least some of the one or more screenshots 1, 11 for the recognizing of the visual information 4, 5, the preparing including: by the one or more computers, editing a portion 3, 4a, 5a of each of the one or more of the at least some of the one or more screenshots 1, 11; wherein the recognized visual information 4, 5 is disclosed in the edited portion of the prepared screenshot. Preferably, the editing of the portion includes cutting out and/or resizing a subpart 3, 4a, 5a of the portion of each of the one or more of the at least some of the one or more screenshots 1, 11, wherein the recognized visual information 4, 5 is disclosed in the cut out and/or resized subpart 3, 4a, 5a of the prepared screenshot. For example, the method may involve cutting out a portion 3 out of screenshot 1, 11 and leave the way a frame-type portion 2 in which no relevant visual information is expected or in which relevant visual information is unlikely to occur. Cut out portion 3 may be the portion of the screenshot 1, 11 which is expected or likely to contain the relevant visual information to be recognized, such as the actual content of the moving visual media.

The method for the visual information recognition may further include filtering 8, by a filter 8 of the one or more computers 119, one or more pieces of recognized visual information 4, 5 out of the recognized visual information 4, 5 based on one or more criteria.

Each particular piece of the recognized visual information 4, 5 may be associated with a confidence score indicating a confidence of the recognition of the particular piece of recognized visual information 4, 5, wherein the one or more criteria may include the confidence scores of pieces of recognized visual information 4, 5, and wherein only those pieces of the recognized visual information 4, 5 may be filtered out of the recognized visual information 4, 5 whose confidence scores are equal to or larger than a predetermined confidence score threshold.

The operations for the visual information recognition may further include: maintaining, by the one or more computers, a data record 6 with a plurality of data record entries 7a, 7b, 7c, 7d, 7e, each data record entry of at least some of the plurality of data record entries 7a, 7b, 7c, 7d, 7e being associated with a corresponding parameter and storing a current parameter value for the parameter.

The one or more criteria of the filtering may alternatively or in addition include a comparison of pieces of the recognized visual information 4, 5 with parameter values stored in the plurality of data record entries 7a, 7b, 7c, 7d, 7e of the data record 6, and wherein only those pieces of the recognized visual information 4, 5 are filtered out of the recognized visual information 4, 5 that are in accordance with the stored parameter values. For example, if a newly recognized piece of visual information is in contradiction with one or more parameter values stored in the data record (the stored one or more parameter values are a result of a previously performed successful visual information recognition), then it is likely that the newly recognized visual information is not correct and may be omitted.

The operations for the visual information recognition may further include: updating ₉, 10, by the one or more computers 119, the one or more current parameter values of one or more data record entries 7b, 7e of the plurality of data record entries 7a, 7b, 7c, 7d, 7e based on the filtered out pieces of recognized visual information 4, 5. For example, filter out pieces of recognized visual information 4, 5 may include values which are stored in the data record entries 7b, 7e, such as by overriding the one or more current parameter values of the one or more data record entries 7b, 7e with the values of the filtered out pieces of recognized visual information 4, 5. For example, a recognized score "1:0" may override a score "0:0" stored in one 7b of the data record entries 7a, 7b, 7c, 7d, 7e of the data record 6 and a recognized team symbol 5 may override a default team symbol stored in one 7e of the data record entries 7a, 7b, 7c, 7d, 7e of the data record 6.

The recognizing of the visual information 4, 5 may be performed based on the parameters associated with the plurality of data record entries 7a, 7b, 7c, 7d, 7e in the data record and/or based on the stored current parameter values of the parameters associated with the plurality of data record entries 7a, 7b, 7c, 7d, 7e in the data record 6. A computer program being used, by the one or more computers 119, for the recognizing of the visual information 4, 5 may includes multiple algorithms or program codes 4b, 5b, wherein each of the algorithms or program codes 4b, 5 bis adapted to recognize visual information 4, 5pertaining to a different parameter, and wherein a decision which of the algorithms or program codes 4b, 5 bis to be used during the recognizing of the visual information 4, 5 is made, by the one or more computers 119, based on the parameters associated with the plurality of data record entries 7a, 7b, 7c, 7d, 7e in the data record and/or based on the stored current parameter values of the parameters associated with the plurality of data record entries 7a, 7b, 7c, 7d, 7e in the data record. The dashed ovals in Figure 1 illustrate respective ones of the algorithms or program codes 4b, 5b, which are applied to corresponding pieces of visual information 4, 5 in the respective edited portion 4a, 5a of the screenshot 1, 11. Based on the current parameter values stored in the data record 3 and for each next screenshot 1, 11, it can be decided which and how many of the algorithms or program codes 4B, 5P should be applied to the next screenshot 1, 11. This allows to, on the one hand, reduce computing resources by avoiding unncessary computations, and, on the other hand, to enhance visual information recognition accuracy by using recognition algorithms/program codes especially adapted to the particular piece of visual information to be recognized.

For example, a particular algorithm or program code may be especially adapted to recognize a particular piece of visual information which is known not to change during the course of the moving visual media. If this particular piece of visual information is already recognized and stored by a parameter value in a record entry of the data record, then the particular algorithm or program code does not need to be invoked and applied to new screenshots to be taken and the corresponding computing resources are saved.

The recognizing of the visual information 4, 5 may be performed by the one or more computers calling a recognition service, such as an OCR service, wherein the recognition service being called is selected, by the one or more computers 119, from a set of recognition services based on the current parameter values stored in the data record 6. The recognition service may be external to the one or more computers. If one recognition service of the set of recognition services fails to recognize a particular piece of visual information, then another recognition service of the set of recognition services may be selected. This allows to use a recognition service especially adapted to a particular piece of visual information to be recognized and thereby to enhance the visual information recognition accuracy and reliability.

The recognizing of the visual information 4, 5 being disclosed by at least some of the one or more screenshots 1, 11 taken of the first one of the received moving visual media may be performed in a first time interval in accordance with a first set of one or more parameters, the method for the visual information recognition may further include: in response to recognizing visual information 4, 5 corresponding to a predetermined parameter or a predetermined parameter value in the recognized visual information 4, 5 in the first time interval, initiating recognizing, by the one or more computers 119 in a second time interval subsequent to the first time interval, visual information 4, 5 being disclosed by at least some of the one or more screenshots 1, 11 taken of the first one of the received moving visual media in accordance with a second set of one or more parameters different from the first set of one or more parameters. During the first time interval, the screenshots may be taken at a first frequency and, during the second time interval, the screenshots are to be taken at a second frequency, wherein the second frequency is preferably higher than the first frequency.

The operations for the visual information recognition may further include: in response to the recognizing of the visual information 4, 5, generating, by the one or more computers 119, instructions for providing a first notification to a first user, wherein a content of the first notification is based on the recognized visual information 4, 5.

The operations for the visual information recognition may further include: identifying, by the one or more computers, a tendency in the recognized visual information 4, 5 across multiple ones of the taken screenshots 1, 11, wherein the the instructions for providing the first notification to the first user 101 are generated in response to the identifying of the tendency, and wherein the content of the first notification is based on the identified tendency.

In any one of the aspects, examples and embodiments described herein, the received one or more moving visual media may include, but is not limited to, one ore more streams with the first one of the received moving visual media being a first stream of the received one ore more streams and/or wherein the received one or more moving visual media include one or more videos with the first one of the received moving visual media being a first video of the received one or more videos. At least some of the received one or more streams may be live streams.

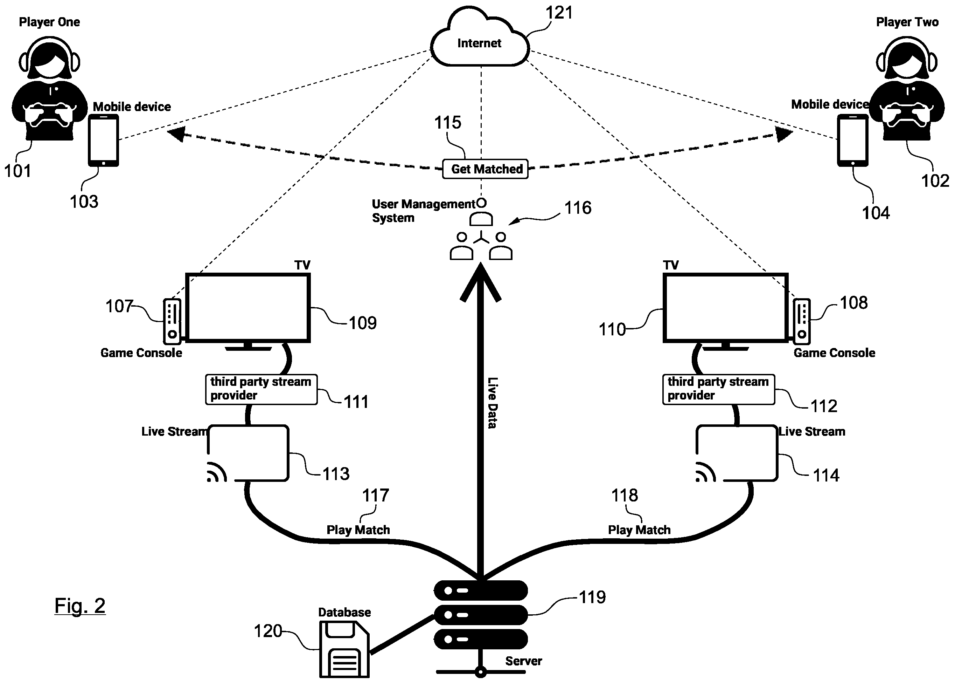

Figure 2 illustrates an exemplary application of the visual information recognition for streams as moving visual media, with each stream pertaining to a play of the game by a player in accordance with an embodiment of the present invention.

In this application of the visual information recognition described herein, and in accordance with an embodiment thereof, the received one or more moving visual media are one or more streams 113, 114 with the first one of the received moving visual media being a first stream 113 of the received one or more streams 113, 114. Each stream 113, 114 shows a play of a game by a player 101, 102 and the recognized visual information of the stream pertains to the play of the game of the stream 113, 114. At least some of the received one or more streams 113, 114 may be live streams and show the corresponding play of the game by the respective player 101, 102 in real time. Preferably, the games are online games. The first player 101 may play against a machine. Alternatively, the first player 101 may play against the second player 102 at essentially the same time. That is, the first player 101 may be at a first location and the second player 102 may be at a second location, wherein the second location may be remote from the first location.

The first player 101 may be a gamer and may be sitting with her/his mobile device 103 in front of his console 107 and television 109 in an area where the jurisdiction allows for skill-gaming contests. The second player 102 may also be a gamer and may be sitting with her/his mobile device 104 in front of his console 108 and television 110 in an area where a jurisdiction allows for skill-gaming contests.

The mobile device of each player has a connection to Internet 121 and may have an application downloaded. Each one of the first and second players 101, 102 may be able to set the stage by making one or more selections through an application downloaded onto the respective mobile device 103, 104. Each player 101, 102 has his/her console 107, 108 turned on, connected to the television 109, 110, has connection to Internet 121 and the game is in the drive of the respective console 107, 108. Each player also has his television 109, 110 turned on and connected to the respective console 107, 108, the game may be shown by the screen of the televisions 109, 110.

By a stream provider 111, 112, such as a third party stream provider, that can be downloaded onto the respective game console 107, 108, each player's screen is being shared or, in other words, the play of the game by each player 101, 102 is being streamed. As each of the streams 114, 1 and 14 may be a live stream, the play of the game by each of the players 1, 2 is shown in real-time or in essentially real-time.

The first and second players 101, 102 can get matched 115 by an User Management System 116 based on one or more matching criteria. The User Management System 116 is connected to the server 19 and may receive real-time data from the server. Furthermore, the User Management System 116 is connected via the Internet 121 to the mobile devices 103, 104 and the consoles 107, 108 of the first and second players 101, 102, respectively.

The first player 101 may then connect to the second player 2 on the corresponding game console 107 and may request to start the actual play of the game. The second player 102 may accept the connection to the first player 101 on the corresponding game console 108 and the two players may then start to play the game which is streamed for each of the players 101, 102.

The server 119 may receice or fetch the streams 1 and 13, 114 of the respective players 101, 102, may record streams and save them in a database 120. The data record 6 may be maintained in the dataabse 120. The server 19 may take one or more automated screenshots 1, 11 of one or more of a streams 113, 114 in (periodical) intervals, which may be slower or faster based on, e.g., the accuracy of the visual information recognition or the quality of the stream. The server 119 may recognize visual information 4, 5 disclosed by the screenshots 1, 11 as described above in context of Figure 1. The server 119 may edit the screenshots, as described above, to optimize for more accurate visual information recognition results. The server 119 may filter out results, as described above, based on criteria such as a confidence level of the recognition of the visual information 4, 5. The server 119 may optionally also analyze their recognized visual information 4, 5. The server 19 may optionally also translate the filtered out recognized visual information into information characterizing the play of the game (life game data).

The operations for the visual information recognition may thus include: translating, by the one or more computers 119, at least the filtered out pieces of recognized visual information 4, 5 to information characterizing the play of the game (such as playtime, score, teams, which half/3rd/quarter of the play of the game etc.), wherein the parameters include game parameters, such as playtime, score, teams, which half/3rd/quarter of the play of the game etc., pertaining to a characteristic of the game, wherein the game parameters associated with the updated one or more data record entries 7a, 7b, 7c, 7d, 7e match the information characterizing the play of the game translated from the filtered out pieces of recognized visual information 4, 5.

The operations for the visual information recognition may include: determining, by the one or more computers 119, the game parameters that pertain to characteristics of the play of the game, wherein the plurality of data record entries 7a, 7b, 7c, 7d, 7e include data record entries 7a, 7b, 7c, 7d, 7e for the determined game parameters and do not include data record entries 7a, 7b, 7c, 7d, 7e for game parameters that do not pertain to characteristics of the play of the game.

Preferably, only those pieces of the recognized visual information 4, 5 are filtered out of the recognized visual information 4, 5 that are in accordance with the stored parameter values of the game parameters that match the information characterizing the play of the game translated from the filtered out pieces of the recognized visual information 4, 5.

Further, only those pieces of the recognized visual information 4, 5 may be filtered out of the recognized visual information 4, 5 that are in accordance with some of the stored parameter values of the game parameters other than the game parameters that match the information characterizing the play of the game translated from the filtered out pieces of the recognized visual information 4, 5.

The translated information (e.g., live game data) may optionally be evaluated by the server 119 and some of evaluated information may be saved away in the database 120, such as in the data record 6, and/or some of evaluated data may be sent to the User Management System 116, which may send evaluated data and/or notifications to mobile devices 103, 104, of the first player 101 and/or the second player 102.

The operations for the visual information recognition may thus include: in response to the recognizing of the visual information 4, 5, generating, by the one or more computers 119, instructions for providing a first notification to a first user, such as the first player 101 in Fig. 2, wherein a content of the first notification is based on the recognized visual information 4, 5.

The operations for the visual information recognition may further include: in resposne to receiving, by the one or more computers 119, a first response from the first player 101 to the first notification, generating, by the one or more computers 119, instructions for providing a second notification to a second user, such as the second player 102, wherein a content of the second notification is based on the recognized visual information 4, 5 and the first response from the first user 101; in resposne to receiving, by the one or more computers 119, a second response from the second user 102 to the second notification, generating, by the one or more computers 119, instructions to store a copy of a portion of the current version of the data record for a comparison with a future version of the data record that is based on future visual information 4, 5 recognized from one or more screenshots 1, 11 to be taken of the first one of the received moving visual media..

The recognizing of the visual information 4, 5 being disclosed by at least some of the one or more screenshots 1, 11 taken of the first stream 113 may be performed in a first time interval in accordance with a first set of one or more parameters.

For example, the first time interval may be an initial phase of the play of the game, such as around the start of the play of the game, where visual information recognition is used to recognize the predetermined parameter or parameter value in the initial screenshots being taken to identify the beginning of the play of the game. As an illustrative example, the visual information recognition may involve recognizing the first time when the score "0:0" occurs in the screenshot of the stream, which marks the point in time when the play of the game is started. In another example, the first time interval may require a smaller set of parameters for other reasons.

During that first time interval, the lower frequency for visual information recognition suffices, because for recognition of all kinds of pieces of visual information potentially being displayed in the screenshot is not needed.

This saves computing resources in this first time interval and allows to catch a transition between different intervals of the moving visual media.

The method for the visual information recognition may further include: in response to recognizing visual information 4, 5 corresponding to the predetermined parameter or the predetermined parameter value in the recognized visual information 4, 5 in the first time interval, initiating recognizing, by the one or more computers 119 in a second time interval subsequent to the first time interval, visual information 4, 5 being disclosed by at least some of the one or more screenshots 1, 11 taken of the first stream in accordance with a second set of one or more parameters different from the first set of one or more parameters. The second set of one or more parameters may be a larger set of parameters compared to the first set of one or more parameters. The first set of one or more parameters may only include the predetermined parameter.

During the first time interval, the screenshots may be taken at a first frequency and, during the second time interval, the screenshots are to be taken at a second frequency, wherein the second frequency is preferably higher than the first frequency.

During the second time interval, the normal operation of the visual information recognition is performed at which, compared to the first time interval, more dynamically changing relevant pieces of visual information, and accordingly more relevant game parameters, are searched for in the screenshots being taken.

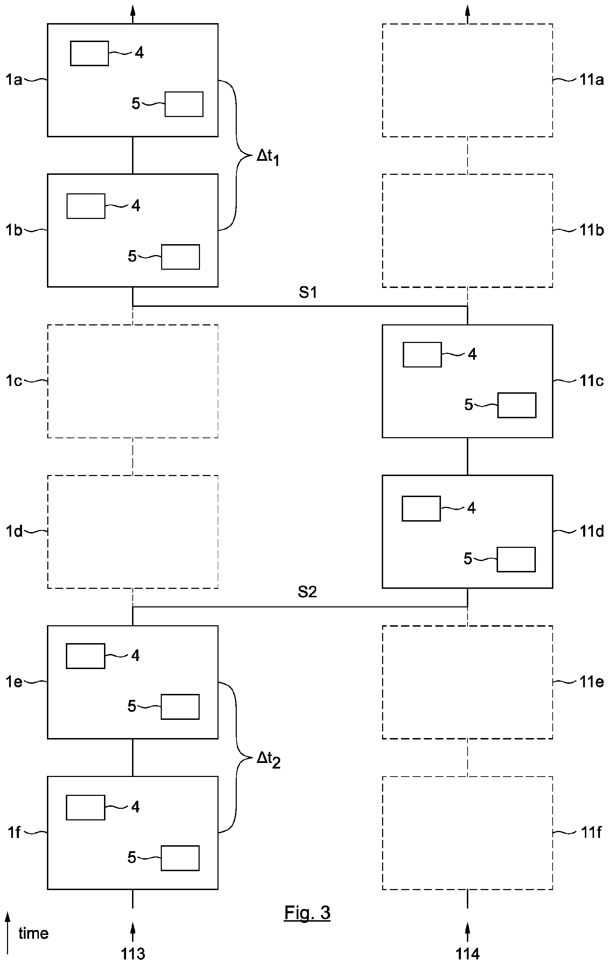

The mobile devices 103, 104 and game consoles 107, 108 of both players may have to be connected to Internet 121 at all times during the play of the game, wherein some of the potential connectivity issues or quality issues of the streams 113, 114 are addressed in preferred embodiments as described herein, such as by the measures described below in context of Figure 3.

Figure 3 illustrates measures of adjustments of the visual information recognition that can be executed in accordance with embodiments of the present invention. The following is not limited to games and is also applicable to other applications of the visual information recognition described herein.

The first group of measures described in the following allows using one of the received streams as a backup for another one of the received streams to reduce the failure rate, such as in case of connectivity or bandwidth problems experienced for the other one of the streams.

In case the received moving visual media being a first stream 113, the operations for visual information recognition may include: in response to determining, by the one or more computers 119, that the first stream 113 is not usable anymore (illustrated in Figure 3 by dashed screenshots 1c, 1d), preliminarily setting, by the one or more computers 119, the first stream 113 as pending. For example, the first stream 113 may not be usable, because the first stream is not available anymore due to an Internet connection and/or network bandwidth problem or because screenshots of the first stream do not provide visual information recognition with a confidence higher than a threshold. In case the pending first stream 113 has not been usable for a predetermined amount of time, finally setting, by the one or computers 119, the pending first stream 113 as not usable anymore. In case the pending first stream 113 is again usablebefore a lapse of the predetermined amount of time (illustrated in Figure 3 by screenshots 1e, 1f), cancelling, by the one or more computers 119, the preliminary setting and continuing, by the one or more computers 119, with taking of one or more screenshots 1e, 1f of the first stream 113 and with recognizing, by the one or more computers 119, of visual information 4, 5 being disclosed by the one or more screenshots 1, 11 that are continued to be taken. For example, the first stream 113 may only shortly be not usable anymore, so that completely omitting them first stream may not make sense and the computing resources required for searching for alternatives can be saved. Due to timestamps associated with the screensots of the streams, the first stream can be picked up again where the visual information recognition was last performed with the first stream.

The received one or more streams 113, 114 may further include a second stream 114, the operations for visual information recognition may further include: in response to preliminarily setting, by the one or more computers 119, the first stream 113 as pending, starting S1 extracting, by the one or more computers 119, information from the second stream 114, the extracting including: recognizing, by the one or more computers 119, visual information 4, 5 being disclosed by at least some of one or more screenshots 11c, 11d taken of the second stream 114. S1 indicates the switching of the information extraction from the first stream 113 to the second stream 114.

Each screenshot 1, 11 been taken may be associated with a corresponding timestamp, so that the screenshots 1c, 1d; 11e, 11f of one stream 113; 114 can be replaced by screenshots 11c, 11d; 1e, if having the same timestamps of another stream 114; 113. That is, the computer system always knows through these timestamps which one is the next screenshot 1, 11 in the respective stream 113, 114.

The operations for visual information recognition may also include: in response to determining, by the one or more computers 119, that the pending first stream 113 is again usable before the lapse of the predetermined amount of time, stopping S2, by the one or more computers 119, the extracting of information from the second stream 114; and in response to the stopping of the extracting of information from the second stream 114, continue extracting, by the one or more computers 119, information from the first stream 113, including recognizing, by the one or more computers 119, visual information 4, 5 being disclosed by at least some of one or more screenshots 1e, if that are continued to be taken of the first stream 113. S2 indicates the switching with the information extraction from the second stream 114 back to the first stream 113.

Each of the above described first group of measures, especially the above switchings Si, S2, allows to reduce the failure rate and is especially beneficial for streams as moving visual media.

The second group of measures described in the following allows to ensure the desired amount of visual information recognition accuracy by dynamically adjusting the frequency and/or the streams currently being used for visual information recognition based on confidence scores. Any one of the measures of this second group of measures is combinable with any one of the measures of the above first group of measures.

In case the first one of the received moving visual media is a first stream 113, the screenshots 1a, 1b, 1c, 1d of the first stream 113 are taken at a given first frequency (frequency f1 = 1/ Δt1), each particular piece of the recognized visual information 4, 5 is associated with a confidence score indicating a confidence of the recognition of the particular piece of recognized visual information 4, 5, and wherein the confidence scores of individual pieces of visual information 4,5 recognized in the first stream 113 contribute to a confidence level of recognition of visual information 4, 5 of the first stream 113, the operations for visual information recognition may include: repeatedly determining, by the one or more computers 119, the confidence level of the first stream 113 and, based on the determined confidence level, dynamically adjusting, by the one or more computers 119, the frequency to a second frequency (f2 = 1/ Δt2) at which the screenshots 1e, if are taken of the first stream 113, wherein the frequency is increased (f2>f1) when the determined confidence level indicates a trend of decreasing confidence of recognition of visual information 4, 5 of the first stream 113 and wherein the frequency is reduced (f2<fi) if the determined confidence level indicates a trend of increasing confidence of recognition of visual information 4, 5 of the first stream 113.

In an independent case, but combinable with any one of the above described measures, the first one of the received moving visual media is a first stream 113, and wherein the screenshots 1a, 1b, 1c, 1d of the first stream 113 are taken at a given first frequency (frequency f1 = 1/ Δt1), the operations for visual information recognition may include: repeatedly determining, by the one or more computers 119, a quality of the first stream 113; and based on the determined quality, dynamically adjusting, by the one or computers, the frequency to a second frequency (frequency f2 = 1/ Δt2) at which the screenshots 1e, if are taken of the first stream 113, wherein the frequency is increased (f2>fi) when the determined quality indicates a trend of decreasing quality of the first stream 113 and wherein the frequency is reduced (f2<fi) if the determined quality indicates a trend of increasing quality of the first stream 113.

The quality of the first stream 113 may be determined by identifying, by the one or more computers 119, the amount of pixels in a screenshot 1 of the first stream 113 compared to maximum number of pixels available for the first stream 113. The maximum number of pixels available for the first stream 113 may be defined by a setting made for the first stream 113, 101 wherein the setting is preferably made by the user at a user device, such as the TV (109,) and/or game console 107.

Preferably, and combinable with each of the above cases, each particular piece of the recognized visual information 4, 5 may be associated with a confidence score indicating a confidence of the recognition of the particular piece of recognized visual information 4, 5, wherein the first one of the received moving visual media is a first stream 113 and wherein the received one or more streams 113, 114 further include a second stream 114, the first stream 113 showing a play of the game by a first player 101 and the second stream 114 showing a play of the game by a second player 102 different from the first player 101, and wherein the confidence scores of individual pieces of visual information 4, 5 recognized in a respective one of the streams 113, 114 contribute to a confidence level of recognition of visual information 4, 5 of the respective stream, the operations for visual information recognition may include: stopping, by the one or more computers 119, the extracting of information from the first stream 113 based on a determination that a current confidence level of the first stream 113 is below a predetermined confidence level threshold or below a previously determined confidence level for the second stream 114; and in response to the stopping, starting S1 extracting, by the one or more computers 119, information from the second stream 114, the extracting including: recognizing, by the one or more computers 119, visual information 4, 5 pertaining to the play of the game by the second player 101, 102 and being disclosed by at least some of one or more screenshots 11c, 11d taken of the second stream 114. S1 indicates the switching with the information extraction from the first stream 113 to the second stream 114. S1 indicates the switching with the information extraction from the first stream 113 to the second stream 114.

Each of the above described second group of measures, especially the above frequency adjustments (fi to f2) and switching Si, allows to ensure a desired high amount of visual information recognition accuracy even in cases of varying degree of stream quality and/or recognizability of the pieces of visual information. These measures are especially beneficial for streams as moving visual media.

Having described several aspects of at least one embodiment of this invention, it is to be appreciated that various alterations, modifications, and improvements will readily occur to those skilled in the art.

Such alterations, modifications, and improvements are intended to be part of this disclosure, and are intended to be within the scope of the invention. Further, though advantages of the present invention are indicated, it should be appreciated that not every embodiment of the technology described herein will include every described advantage. Some embodiments may not implement any features described as advantageous herein and in some instances one or more of the described features may be implemented to achieve further embodiments. Accordingly, this description and these drawings are by way of example only.

The above-described embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. However, a processor may be implemented using circuitry in any suitable format.

Further, it should be appreciated that a computer, such as server 119, may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet 121. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the present invention may be embodied as a computer-readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the invention discussed above. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present invention as discussed above. As used herein, the term "computer-readable storage medium" encompasses only a non-transitory computer-readable medium that can be considered to be a manufacture (i.e., article of manufacture) or a machine. Alternatively or additionally, the invention may be embodied as a computer readable medium other than a computer-readable storage medium, such as a propagating signal.

The terms "algorithm", "program code", "computer program" or "software" are used herein in a generic sense to refer to any type of computer code or set of computer-executable instructions that can be employed to program a computer or other processor to implement various aspects of the present invention as discussed above. Additionally, it should be appreciated that according to one aspect of this embodiment, one or more computer programs that when executed perform methods of the present invention need not reside on a single computer or processor, but may be distributed in a modular fashion amongst a number of different computers or processors to implement various aspects of the present invention.

Computer-executable instructions may be in many forms, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Also, the data record may be stored in computer-readable media in any suitable form. For simplicity of illustration, data records may be shown to have data record entries. However, any suitable mechanism may be used to establish locations within the data record to store data, such as parameter values.

Various aspects of the present invention may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by a "user" or "player". It should be appreciated that a "user" or "player" need not be a single individual, and that in some embodiments, actions attributable to a "user" or "player"may be performed by a team of individuals and/or an individual in combination with computer-assisted tools or other mechanisms.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

Various embodiments have been described. The present invention may also (alternatively) be described by the below numbered aspects 1 to 32:

### Aspects

1. A method, comprising:
   receiving, by one or more computers 119, one or more moving visual media;
   taking, by the one or more computers 119, one or more screenshots 1, 11 of a first one of the received moving visual media; and
   extracting, by the one or more computers 119, information from the first one of the received moving visual media, the extracting including:
      recognizing, by the one or more computers 119, visual information 4, 5 being disclosed by at least some of the one or more screenshots 1, 11 taken of the first one of the received moving visual media.
2. The method of aspect 1, further comprising:
   filtering 8, by the one or more computers 119, one or more pieces of recognized visual information 4, 5 out of the recognized visual information 4, 5 based on one or more criteria.
3. The method of aspect 2, further comprising:
   maintaining, by the one or more computers 119, a data record 6 with a plurality of data record entries 7a, 7b, 7c, 7d, 7e, each data record entry of at least some of the plurality of data record entries 7a, 7b, 7c, 7d, 7e being associated with a corresponding parameter and storing a current parameter value for the parameter; and
   updating 9, 10, by the one or more computers 119, the one or more current parameter values of one or more data record entries 7b, 7e of the plurality of data record entries 7a, 7b, 7c, 7d, 7e based on the filtered out pieces of recognized visual information 4, 5,
4. The method of any one of the preceding aspects, wherein the received one or more moving visual media include one ore more streams 113, 114 with the first one of the received moving visual media being a first stream 113 of the received one ore more streams 113, 114 and/or wherein the received one or more moving visual media include one or more videos with the first one of the received moving visual media being a first video of the received one or more videos.
5. The method of aspect 4, wherein each stream 113, 114 and/or each video of at least some of the received one or more moving visual media show a play of a game by a player 101, 102, and wherein the recognized visual information pertains to the play of the game.
6. The method of any one of aspects 3 to 5, wherein the recognizing of the visual information 4, 5 is performed based on the parameters associated with the plurality of data record entries 7a, 7b, 7c, 7d, 7e in the data record and/or based on the stored parameter values of the parameters associated with the plurality of data record entries 7a, 7b, 7c, 7d, 7e in the data record 6.
7. The method of any one of aspects 3 to 6, wherein a computer program being used, by the one or more computers 119, for the recognizing of the visual information 4, 5 includes multiple algorithms 4b, 5b, wherein each of the algorithms 4b, 5 bis adapted to recognize visual information 4, 5 pertaining to a different parameter, and wherein a decision which of the algorithms 4b, 5 bis to be used during the recognizing of the visual information 4, 5 is made, by the one or more computers 119, based on the parameters associated with the plurality of data record entries 7a, 7b, 7c, 7d, 7e in the data record and/or based on the stored current parameter values of the parameters associated with the plurality of data record entries 7a, 7b, 7c, 7d, 7e in the data record.
8. The method of any one of aspects 4 to 7, wherein the first one of the received moving visual media is the first stream 113, the method further comprising:
   in response to determining, by the one or more computers 119, that the first stream 113 is not usable anymore, preliminarily setting, by the one or more computers 119, the first stream 113 as pending;
   in case the pending first stream 113 has not been usable for a predetermined amount of time, finally setting, by the one or computers 119, the pending first stream 113 as not usable anymore;
   in case the pending first stream 113 is again usable before a lapse of the predetermined amount of time, cancelling, by the one or more computers 119, the preliminary setting and continuing, by the one or more computers 119, with taking of one or more screenshots 1, 11 of the first stream 113 and with recognizing, by the one or more computers 119, of visual information 4, 5 being disclosed by the one or more screenshots 1, 11 that are continued to be taken.
9. The method of aspect 8, wherein the received one or more streams 113, 114 further include a second stream 114, the method further comprising:
   in response to preliminarily setting, by the one or more computers 119, the first stream 113 as pending,
   starting extracting, by the one or more computers 119, information from the second stream 114, the extracting including:
   recognizing, by the one or more computers 119, visual information 4, 5 being disclosed by at least some of one or more screenshots 1, 11 taken of the second stream 114.
10. The method of any one of aspects 4 to 9, wherein the first one of the received moving visual media is the first stream 113, the screenshots 1, 11 of the first stream 113 are taken at a given frequency, each particular piece of the recognized visual information 4, 5 is associated with a confidence score indicating a confidence of the recognition of the particular piece of recognized visual information 4, 5, and wherein the confidence scores of individual pieces of visual information 4, 5 recognized in the first stream 113 contribute to a confidence level of recognition of visual information 4, 5 of the first stream 113,
   the method further comprising:
   repeatedly determining, by the one or more computers 119, the confidence level of the first stream 113 and, based on the determined confidence level, dynamically adjusting, by the one or more computers 119, the frequency at which the screenshots 1, 11 are taken of the first stream 113, wherein the frequency is increased when the determined confidence level indicates a trend of decreasing confidence of recognition of visual information 4, 5 of the first stream 113 and wherein the frequency is reduced if the determined confidence level indicates a trend of increasing confidence of recognition of visual information 4, 5 of the first stream 113.
11. The method of any one of aspects 4 to 10, wherein the first one of the received moving visual media is the first stream 113, and wherein the screenshots 1, 11 of the first stream 113 are taken at a given frequency,
   the method further comprising:
   repeatedly determining, by the one or more computers 119, a quality of the first stream 113; and
   based on the determined quality, dynamically adjusting, by the one or computers, the frequency at which the screenshots 1, 11 are taken of the first stream 113, wherein the frequency is increased when the determined quality indicates a trend of decreasing quality of the first stream 113 and wherein the frequency is reduced if the determined quality indicates a trend of increasing quality of the first stream 113.
12. The method of any one of the preceding aspects, further comprising:
   in response to the recognizing of the visual information 4, 5, generating, by the one or more computers 119, instructions for providing a first notification to a first user 101, wherein a content of the first notification is based on the recognized visual information 4, 5.
13. The method of any one of the preceding aspects, wherein the recognizing of the visual information 4, 5 being disclosed by at least some of the one or more screenshots 1, 11 taken of the first one of the received moving visual media is is performed in a first time interval in accordance with a first set of one or more parameters, the method further comprising:
   in response to recognizing visual information 4, 5 corresponding to a predetermined parameter or a predetermined parameter value in the recognized visual information 4, 5 in the first time interval, initiating recognizing, by the one or more computers 119 in a second time interval subsequent to the first time interval, visual information 4, 5 being disclosed by at least some of the one or more screenshots 1, 11 taken of the first one of the received moving visual media in accordance with a second set of one or more parameters different from the first set of one or more parameters.
14. The method of any one of the preceding aspects, wherein each particular piece of the recognized visual information 4, 5 is associated with a confidence score indicating a confidence of the recognition of the particular piece of recognized visual information 4, 5, wherein the first one of the received moving visual media is the first stream 113 and wherein the received one or more streams 113, 114 further include a second stream 114, the first stream 113 showing a play of the game by a first player 101 and the second stream 114 showing a play of the game by a second player 102 different from the first player 101, and wherein the confidence scores of individual pieces of visual information 4, 5 recognized in a respective one of the streams 113, 114 contribute to a confidence level of recognition of visual information 4, 5 of the respective stream, the method further comprising:
   stopping, by the one or more computers 119, the extracting of information from the first stream 113 based on a determination that a current confidence level of the first stream 113 is below a predetermined confidence level threshold or below a previously determined confidence level for the second stream 114; and
   in response to the stopping,
      starting extracting, by the one or more computers 119, information from the second stream 114, the extracting including:
      recognizing, by the one or more computers 119, visual information 4, 5 pertaining to the play of the game by the second player 101, 102 and being disclosed by at least some of one or more screenshots 1, 11 taken of the second stream 114.
15. The method of any one of aspects 2 to 14, wherein each particular piece of the recognized visual information 4, 5 is associated with a confidence score indicating a confidence of the recognition of the particular piece of recognized visual information 4, 5, wherein the one or more criteria include the confidence scores of pieces of recognized visual information 4, 5, and wherein only those pieces of the recognized visual information 4, 5 are filtered out of the recognized visual information 4, 5 whose confidence scores are equal to or larger than a predetermined confidence score threshold.
16. The method of any one of aspects 3 to 15, wherein the one or more criteria include a comparison of pieces of the recognized visual information 4, 5 with the parameter values stored in the plurality of data record entries 7a, 7b, 7c, 7d, 7e of the data record, and wherein only those pieces of the recognized visual information 4, 5 are filtered out of the recognized visual information 4, 5 that are in accordance with the stored parameter values.
17. The method of any one of aspects 1 to 16, further comprising:
   translating, by the one or more computers 119, at least the filtered out pieces of recognized visual information 4, 5 to information characterizing the play of the game, wherein the parameters include game parameters pertaining to a characteristic of the game, wherein the game parameters associated with the updated one or more data record entries 7a, 7b, 7c, 7d, 7e match the information characterizing the play of the game translated from the filtered out pieces of recognized visual information 4, 5.
18. The method of any one of aspects 5 to 17, further comprising:
   determining, by the one or more computers 119, game parameters that pertain to characteristics of the play of the game, wherein the plurality of data record entries 7a, 7b, 7c, 7d, 7e include data record entries 7a, 7b, 7c, 7d, 7e for the determined game parameters and do not include data record entries 7a, 7b, 7c, 7d, 7e for game parameters that do not pertain to characteristics of the play of the game.
19. The method of aspect 18 or 19, wherein only those pieces of the recognized visual information 4, 5 are filtered out of the recognized visual information 4, 5 that are in accordance with the stored parameter values of the game parameters that match the information characterizing the play of the game translated from the filtered out pieces of the recognized visual information 4, 5.
20. The method of anx one of aspects 17 to 19, wherein only those pieces of the recognized visual information 4, 5 are filtered out of the recognized visual information 4, 5 that are in accordance with some of the stored parameter values of the game parameters other than the game parameters that match the information characterizing the play of the game translated from the filtered out pieces of the recognized visual information 4,5.
21. The method of any one of the preceding aspects, wherein the recognizing of the visual information 4, 5 is performed by the one or more computers 119 calling a recognition service, wherein the recognition service being called is selected, by the one or more computers 119, from a set of recognition services based on the current parameter values stored in the data record, preferably, wherein the recognition service is external to the one or more computers 119.
22. The method of any one of the preceding aspects, wherein the recognized visual information 4, 5 includes one or more of text 4, color, symbol, shapes 5, forms, pattern and visual gradient.
23. The method of any one of the preceding aspects, further comprising:
   preparing, by the one or more computers 119, one or more of the at least some of the one or more screenshots 1, 11 for the recognizing of the visual information 4, 5, the preparing including:
      by the one or more computers 119, editing a portion of each of the one or more of the at least some of the one or more screenshots 1, 11;
   wherein the recognized visual information 4, 5 is disclosed in the edited portion of the prepared screenshot.
24. The method of aspect 23, wherein the editing of the portion includes cutting out and/or resizing a subpart 3, 4a, 5a of the portion of each of the one or more of the at least some of the one or more screenshots 1, 11,
   wherein the recognized visual information 4, 5 is disclosed in the cut out and/or resized subpart 3, 4a, 5a of the prepared screenshot.
25. The method of any one of aspects 5 to 24, wherein at least some of the received one or more streams 113, 114 are live streams and show the corresponding play of the game by the respective player 101, 102 in real time.
26. The method of any one of aspects 11 to 25, wherein the quality of the first stream 113 is determined by identifying, by the one or more computers 119, the amount of pixels in a screenshot of the first stream 113 compared to maximum number of pixels available for the first stream 113.
27. The method of any one of aspects 12 to 26, further comprising:
   in resposne to receiving, by the one or more computers 119, a first response from the first user 101 to the first notification, generating, by the one or more computers 119, instructions for providing a second notification to a second user 102, wherein a content of the second notification is based on the recognized visual information 4, 5 and the first response from the first user 101;
   in resposne to receiving, by the one or more computers 119, a second response from the second user 102 to the second notification, generating, by the one or more computers 119, instructions to store a copy of a portion of the current version of the data record for a comparison with a future version of the data record that is based on future visual information 4, 5 recognized from one or more screenshots 1, 11 to be taken of the first one of the received moving visual media..
28. The method of any one of aspects 12 to 27, further comprising:
   identifying, by the one or more computers 119, a tendency in the recognized visual information 4, 5 across multiple ones of the taken screenshots 1, 11,
   wherein the the instructions for providing the first notification to the first user 101 are generated in response to the identifying of the tendency, and wherein the content of the first notification is based on the identified tendency.
29. The method of any one of aspects 13 to 28, wherein, during the first time interval, the screenshots are taken at a first frequency and, during the second time interval, the screenshots are to be taken at a second frequency, wherein the second frequency is higher than the first frequency.
30. The method of any one of aspects 9 to 29, the method further comprising:
   in response to determining, by the one or more computers 119, that the pending first stream 113 is again usable before the lapse of the predetermined amount of time, stopping, by the one or more computers 119, the extracting of information from the second stream 114; and
   in response to the stopping of the extracting of information from the second stream 114,
      continue extracting, by the one or more computers 119, information from the first stream 113, including recognizing, by the one or more computers 119, visual information 4, 5 being disclosed by at least some of one or more screenshots 1, 11 that are continued to be taken of the first stream 114.
31. A computer-readable storage medium storing instructions, which, when executed by one or more computers, cause the one or more computers to perform the operations of the method of any one of the preceding aspects.
32. A computing system, the system comprising:
   one or more processors;
   a memory storing instructions which, when executed by the one or more processors, cause the one or more processors to perform the operations of the method of any one of aspects 1 to 30.

The present invention is defined by the following independent claims. Preferred embodiments are described by the following dependent claims as well as by aspects, examples and embodiments described above.

## Claims

1. A method, comprising:
receiving, by one or more computers (119), one or more moving visual media;
taking, by the one or more computers (119), one or more screenshots (1, 11) of a first one of the received moving visual media; and
extracting, by the one or more computers (119), information from the first one of the received moving visual media, the extracting including:
recognizing, by the one or more computers (119), visual information (4, 5) being disclosed by at least some of the one or more screenshots (1, 11) taken of the first one of the received moving visual media.

2. The method of claim 1, further comprising:
filtering (8), by the one or more computers (119), one or more pieces of recognized visual information (4, 5) out of the recognized visual information (4, 5) based on one or more criteria.

3. The method of claim 2, further comprising:
maintaining, by the one or more computers (119), a data record (6) with a plurality of data record entries (7a, 7b, 7c, 7d, 7e), each data record entry of at least some of the plurality of data record entries (7a, 7b, 7c, 7d, 7e) being associated with a corresponding parameter and storing a current parameter value for the parameter; and
updating (9, 10), by the one or more computers (119), the one or more current parameter values of one or more data record entries (7b, 7e) of the plurality of data record entries (7a, 7b, 7c, 7d, 7e) based on the filtered out pieces of recognized visual information (4, 5),

4. The method of any one of the preceding claims, wherein the received one or more moving visual media include one ore more streams (113, 114) with the first one of the received moving visual media being a first stream (113) of the received one ore more streams (113, 114) and/or wherein the received one or more moving visual media include one or more videos with the first one of the received moving visual media being a first video of the received one or more videos.

5. The method of claim 4, wherein each stream (113, 114) and/or each video of at least some of the received one or more moving visual media show a play of a game by a player (101, 102), and wherein the recognized visual information pertains to the play of the game.

6. The method of any one of claims 3 to 5, wherein the recognizing of the visual information (4, 5) is performed based on the parameters associated with the plurality of data record entries (7a, 7b, 7c, 7d, 7e) in the data record and/or based on the stored parameter values of the parameters associated with the plurality of data record entries (7a, 7b, 7c, 7d, 7e) in the data record (6).

7. The method of any one of claims 3 to 6, wherein a computer program being used, by the one or more computers (119), for the recognizing of the visual information (4, 5) includes multiple algorithms (4b, 5b), wherein each of the algorithms (4b, 5b) is adapted to recognize visual information (4, 5) pertaining to a different parameter, and wherein a decision which of the algorithms (4b, 5b) is to be used during the recognizing of the visual information (4, 5) is made, by the one or more computers (119), based on the parameters associated with the plurality of data record entries (7a, 7b, 7c, 7d, 7e) in the data record and/or based on the stored current parameter values of the parameters associated with the plurality of data record entries (7a, 7b, 7c, 7d, 7e) in the data record.

8. The method of any one of claims 4 to 7, wherein the first one of the received moving visual media is the first stream (113), the method further comprising:
in response to determining, by the one or more computers (119), that the first stream (113) is not usable anymore, preliminarily setting, by the one or more computers (119), the first stream (113) as pending;
in case the pending first stream (113) has not been usable for a predetermined amount of time, finally setting, by the one or computers (119), the pending first stream (113) as not usable anymore;
in case the pending first stream (113) is again usable before a lapse of the predetermined amount of time, cancelling, by the one or more computers (119), the preliminary setting and continuing, by the one or more computers (119), with taking of one or more screenshots (1, 11) of the first stream (113) and with recognizing, by the one or more computers (119), of visual information (4, 5) being disclosed by the one or more screenshots (1, 11) that are continued to be taken.

9. The method of claim 8, wherein the received one or more streams (113, 114) further include a second stream (114), the method further comprising:
in response to preliminarily setting, by the one or more computers (119), the first stream (113) as pending,
starting extracting, by the one or more computers (119), information from the second stream (114), the extracting including:
recognizing, by the one or more computers (119), visual information (4, 5) being disclosed by at least some of one or more screenshots (1, 11) taken of the second stream (114).

10. The method of any one of claims 4 to 9, wherein the first one of the received moving visual media is the first stream (113), the screenshots (1, 11) of the first stream (113) are taken at a given frequency, each particular piece of the recognized visual information (4, 5) is associated with a confidence score indicating a confidence of the recognition of the particular piece of recognized visual information (4, 5), and wherein the confidence scores of individual pieces of visual information (4, 5) recognized in the first stream (113) contribute to a confidence level of recognition of visual information (4, 5) of the first stream (113),
the method further comprising:
repeatedly determining, by the one or more computers (119), the confidence level of the first stream (113) and, based on the determined confidence level, dynamically adjusting, by the one or more computers (119), the frequency at which the screenshots (1, 11) are taken of the first stream (113), wherein the frequency is increased when the determined confidence level indicates a trend of decreasing confidence of recognition of visual information (4, 5) of the first stream (113) and wherein the frequency is reduced if the determined confidence level indicates a trend of increasing confidence of recognition of visual information (4, 5) of the first stream (113).

11. The method of any one of claims 4 to 10, wherein the first one of the received moving visual media is the first stream (113), and wherein the screenshots (1, 11) of the first stream (113) are taken at a given frequency,
the method further comprising:
repeatedly determining, by the one or more computers (119), a quality of the first stream (113); and
based on the determined quality, dynamically adjusting, by the one or computers, the frequency at which the screenshots (1, 11) are taken of the first stream (113), wherein the frequency is increased when the determined quality indicates a trend of decreasing quality of the first stream (113) and wherein the frequency is reduced if the determined quality indicates a trend of increasing quality of the first stream (113).

12. The method of any one of the preceding claims, further comprising:
in response to the recognizing of the visual information (4, 5), generating, by the one or more computers (119), instructions for providing a first notification to a first user (101), wherein a content of the first notification is based on the recognized visual information (4, 5).

13. The method of any one of the preceding claims, wherein the recognizing of the visual information (4, 5) being disclosed by at least some of the one or more screenshots (1, 11) taken of the first one of the received moving visual media is is performed in a first time interval in accordance with a first set of one or more parameters, the method further comprising:
in response to recognizing visual information (4, 5) corresponding to a predetermined parameter or a predetermined parameter value in the recognized visual information (4, 5) in the first time interval, initiating recognizing, by the one or more computers (119) in a second time interval subsequent to the first time interval, visual information (4, 5) being disclosed by at least some of the one or more screenshots (1, 11) taken of the first one of the received moving visual media in accordance with a second set of one or more parameters different from the first set of one or more parameters.

14. A computer-readable medium storing instructions, which, when executed by one or more computers, cause the one or more computers to perform the operations of the method of any one of the preceding claims.

15. A computing system, the system comprising:
one or more processors;
a memory storing instructions which, when executed by the one or more processors, cause the one or more processors to perform the operations of the method of any one of claims 1 to 13.
